(19) Europäisches Patentamt / European Patent Office / Office européen des brevets

(11) **EP 4 113 301 B1**

(12) **FASCICULE DE BREVET EUROPEEN**

(45) Date de publication et mention de la délivrance du brevet:
**19.02.2025 Bulletin 2025/08**

(21) Numéro de dépôt: **22181170.6**

(22) Date de dépôt: **27.06.2022**

(51) Classification Internationale des Brevets (IPC):
**G06N 3/045** *(2023.01)* **G06N 3/088** *(2023.01)*
**G06F 9/50** *(2006.01)*

(52) Classification Coopérative des Brevets (CPC):
**G06N 3/088; G06F 9/5072; G06N 3/045**

(54) **MÉTHODE DE CALCUL EN PÉRIPHÉRIE DE RÉSEAU UTILISANT UN MODÈLE GÉNÉRATIF DE DONNÉES**

BERECHNUNGSMETHODE AM NETZWERKRAND UNTER VERWENDUNG EINES GENERATIVEN DATENMODELLS

METHOD FOR CALCULATING THE PERIPHERY OF NETWORK USING A DATA GENERATION MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2021 FR 2106928**

(43) Date de publication de la demande:
**04.01.2023 Bulletin 2023/01**

(73) Titulaire: **Commissariat à l'Energie Atomique et aux Energies Alternatives**
**75015 Paris (FR)**

(72) Inventeur: **CALVANESE STRINATI, Emilio**
**38054 GRENOBLE CEDEX 09 (FR)**

(74) Mandataire: **Brevalex**
**56, Boulevard de l'Embouchure**
**B.P. 27519**
**31075 Toulouse Cedex 2 (FR)**

(56) Documents cités:
**EP-A1- 3 605 329    FR-A1- 3 045 859**

• **ALFREDO NAZABAL ET AL: "Handling Incomplete Heterogeneous Data using VAEs", ARXIV.ORG, CORNELL UNIVERSITY LIBRARY, 201 OLIN LIBRARY CORNELL UNIVERSITY ITHACA, NY 14853, 10 July 2018 (2018-07-10), XP081055657**
• **YU GONG ET AL: "Variational Selective Autoencoder: Learning from Partially-Observed Heterogeneous Data", ARXIV.ORG, CORNELL UNIVERSITY LIBRARY, 201 OLIN LIBRARY CORNELL UNIVERSITY ITHACA, NY 14853, 25 February 2021 (2021-02-25), XP081892096**

**Description**

**DOMAINE TECHNIQUE**

La présente invention concerne le domaine du calcul en périphérie de réseau ou MEC (*Mobile Edge Computing*), également connu sous le nom de calcul en périphérie multi-accès (*Multi-Access Edge Computing*), en particulier pour les réseaux de petites cellules tels que les réseaux 5G.

**ÉTAT DE LA TECHNIQUE ANTÉRIEURE**

Avec le déploiement de la technologie 5G et ses futurs développements (*Beyond 5G*), les terminaux mobiles ou UEs (*User Equipment*) font appel à des ressources de calcul de plus en plus importantes et nécessitent des temps de latence de plus en plus courts tout en requérant une faible consommation d'énergie. En outre, le développement de nouvelles applications, notamment dans le domaine de l'apprentissage automatique et, plus généralement, dans le domaine de l'intelligence artificielle suppose de pouvoir disposer de grandes capacités de traitement et de tailles de mémoire importantes.

Afin de pouvoir faire face à ces nouvelles demandes, les tâches consommatrices de ressources de calcul et/ou en énergie peuvent être déportées sur le cloud, au détriment cependant du temps de latence, en raison de la difficulté à contrôler les délais de bout en bout dans un réseau WAN. Pour réduire ces délais et les besoins de communication entre l'utilisateur et le cloud, il a été proposé de déplacer les ressources de calcul disponibles dans le cloud vers la périphérie du réseau. Cette solution, connue dans l'état de la technique sous l'acronyme MEC (*Mobile Edge Computing* ou *Multi-access Edge Computing*) consiste à prévoir en périphérie du réseau, à proximité des stations de base, des serveurs possédant des ressources de calcul disponibles suffisantes et des caches mémoire pour éviter la répétition des calculs les plus fréquents. Les réseaux équipés de telles ressources en périphérie sont dénommés réseaux MEC.

Cette tendance visant à rapprocher les ressources de calcul du cloud vers les utilisateurs (UEs) est à mettre en parallèle avec celle visant à rapprocher les points d'accès radio vers ces mêmes utilisateurs dans un réseau hétérogène (HeNB). Ainsi, dans un réseau hétérogène constitué de macro-cellules (*macro-cells*) et de petites cellules, quelle que soit leur dénomination (*small cells, femto-cells, pico-cells*), les petites cellules servant les utilisateurs ou SSCs (*Serving Small Cells*) peuvent être équipées d'unités de calcul et de mémoires cache de manière à servir les requêtes des UEs et exécuter des tâches qui leur sont demandées. Les macro-cellules coexistent avec les petites cellules et fournissent aux UEs une couverture de plus longue portée.

Etant donné que différents UEs peuvent transmettre de manière répétitive l'exécution d'une même tâche à une SSC, il a été proposé dans la demande FR-A-3045859 de stocker les résultats de calcul d'une telle tâche dans une mémoire cache hébergée par un serveur MEH (*Mobile Edge Host*) associé à la SSC en question. Les serveurs MEH de cellules voisines peuvent être fédérés en grappes (clusters) de manière à pouvoir mettre en commun des résultats de calcul de différentes tâches. Lorsque le résultat du calcul d'une tâche requise par le terminal est déjà présent dans la mémoire cache du MEH (voire de la grappe de MEH), celui-ci est simplement téléchargé et le calcul n'est pas effectué à nouveau.

Les avantages découlant de la mise en cache de résultats de calcul sont multiples : celle-ci permet en effet une réduction drastique du temps de calcul et de la consommation d'énergie tant du côté du terminal mobile (UE) que de la station de base (SSC), une réduction du trafic de données sur la voie montante ainsi qu'un allègement de la charge de travail de la station de base.

Toutefois, cette mise en cache présente plusieurs limitations. Tout d'abord, elle suppose que le calcul ait été précédemment effectué sur la base des mêmes arguments, autrement dit que les données d'entrée de la tâche soient identiques. Or, bien souvent, même si une tâche est souvent répétée (tâche dite de popularité élevée), celle-ci est effectuée sur des données différentes. En outre, certains utilisateurs pouvant de pas accepter le stockage de données confidentielles ou les contraintes réglementaires l'interdisant, les données d'entrée peuvent être partiellement voire totalement lacunaires, ce qui rend la mise en cache inopérante.

L'objet de la présente invention est par conséquent de proposer une méthode de calcul en périphérie de réseau qui ne présente pas les inconvénients précités et notamment qui s'accommode d'une mise en cache de résultats de calcul en dépit de données d'entrée lacunaires transmises par les terminaux mobiles. La demande de brevet FR3045859 A1 (COMMISSARIAT ENERGIE ATOMIQUE [FR]) 23 juin 2017, décrit un procédé de traitement de tâches informatiques dans un environnement de calcul distribué. Il comprend les étapes suivantes : 1- Identification d'équipements susceptibles de stocker le résultat d'une tâche. 2- Sélection d'équipements pour former un groupe de recherche. 3- Vérification du stockage effectif du résultat dans ce groupe.4- Si le résultat est trouvé, il est téléchargé. 5- Sinon, la tâche est exécutée pour obtenir le résultat. L'objectif principal est d'optimiser l'exécution des tâches en évitant les calculs redondants et en exploitant les résultats déjà disponibles dans le réseau distribué.

**EXPOSÉ DE L'INVENTION**

Un premier aspect de la présente invention consiste en la méthode de calcul en périphérie de réseau (MEC) définie par la revendication 1.

Avantageusement, à l'étape (a) le terminal mobile détermine si les requêtes de tâches calculatoires sont délégables ou non, seules les requête délégables étant transmises au MEH et les autres étant effectuées par le terminal mobile lui-même.

A l'étape (b), le MEH attribue aux requêtes de tâches calculatoires des degrés de priorité selon une stratégie de priorisation, les requêtes étant ensuite sélectionnées sur la base des degrés de priorité qui leur ont été respectivement attribués.

Un degré de priorité peut être ensuite attribué à une requête de tache calculatoire en fonction d'un degré de popularité de cette tâche dans la cellule (SSC) où se trouve le terminal mobile ayant transmis la requête.

Avantageusement, le degré de popularité d'une requête de tâche calculatoire est obtenu à partir d'une matrice de popularité, ladite matrice de popularité étant constitué d'éléments, chaque élément étant relatif à une tâche calculatoire parmi une pluralité K de tâches et à une cellule parmi une pluralité N de cellules voisines.

Le degré de priorité d'une requête de tâche calculatoire est choisi proportionnel au degré de popularité de cette tâche calculatoire ainsi qu'à la taille d'un vecteur représentant les données d'entrée de cette tâche.

Alternativement, le degré de priorité d'une requête de tâche calculatoire est choisi proportionnel au degré de popularité de cette tâche calculatoire, à la taille d'un vecteur représentant les données d'entrée de cette tâche et inversement proportionnel à la taille du résultat du calcul de cette tâche.

Alternativement, le degré de priorité d'une requête de tâche calculatoire est choisi proportionnel au degré de popularité de cette tâche calculatoire, à la taille d'un vecteur représentant les données d'entrée de cette tâche et inversement proportionnel à la taille du modèle génératif associé à cette tâche.

Alternativement, le degré de priorité d'une requête de tâche calculatoire est choisi proportionnel au degré de popularité de cette tâche calculatoire ainsi qu'à la taille d'un vecteur représentant les données d'entrée de cette tâche, et inversement proportionnel à la taille du modèle génératif ainsi qu'à la taille du résultat de calcul de cette tâche.

Avantageusement, les MEHs d'une pluralité de cellules voisines partagent une mémoire dans lesquels sont stockés les paramètres des modèles génératifs et/ou les résultats des calculs de tâches calculatoires à partir des données de synthèse générées par ces modèles génératifs.

Lesdits modèles génératifs peuvent être des réseaux de neurones antagonistes (GAN) ou des auto-encodeurs variationnels (VAE).

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un premier exemple de modèle génératif permettant de modéliser une distribution de données d'entrée d'une tâche calculatoire ;

La Fig. 2 représente de manière schématique un second exemple de modèle génératif permettant de modéliser une distribution de données d'entrée d'une tâche calculatoire ;

La Fig. 3 représente de manière schématique un système permettant de mettre en œuvre une méthode de calcul par mise en cache de résultats d'une tâche calculatoire, selon un mode de réalisation de l'invention ;

La Fig. 4 représente de manière schématique l'organigramme d'une méthode de calcul par mise en cache de résultats d'une tâche calculatoire en périphérie de réseau MEC, selon un mode de réalisation de l'invention ;

La Fig. 5 représente de manière schématique un exemple de réalisation de la sélection de requêtes des tâches calculatoires dont les données d'entrée sont à modéliser.

## EXPOSÉ DÉTAILLÉ DE MODES DE RÉALISATION PARTICULIERS

On considérera dans la suite un réseau MEC, c'est-à-dire un réseau comportant des cellules, typiquement des SSCs, dotées de ressources de calcul locales ainsi que de mémoires cache. Les ressources de calcul d'une cellule peuvent être celles d'un serveur de calcul ou par un voire plusieurs ordinateurs situés dans la station de base servant la cellule, ou encore par des machines virtuelles émulées sur un serveur local. Les mémoires cache sont hébergées dans la station de base ou le serveur local. Dans certains modes de réalisation les ressources de calcul et/ou les mémoire cache peuvent être partagées par une pluralité de cellules voisines.

Les terminaux mobiles ou UEs peuvent effectuer certaines tâches calculatoires ou bien les déléguer à un hôte en périphérie de réseau ou MEH (*Mobile Edge Host*), par exemple un serveur de calcul associé à une cellule SSC ou une grappe de cellules SSCs comme mentionné dans la partie introductive.

La délégation de ces tâches calculatoires au MEH, c'est-à-dire leur report (*offloading*) en périphérie de réseau est généralement réalisé(e) par voie de requête (dans certains cas le MEH pourra lui-même requérir l'envoi de données pour effectuer une tâche calculatoire). On supposera dans la suite qu'une telle requête est définie par une tâche calculatoire $c_k$ appartenant à un catalogue constitué par un nombre prédéterminé, $K$, de tâches $C = \{c_1,...,c_K\}$, chaque tâche calculatoire étant associée à un vecteur de données d'entrée (ou arguments d'entrée). Une requête $R_k$ peut contenir toutes les données d'entrée, $X_k^{in}$, nécessaires à l'exécution de la tâche calculatoire (la requête est alors dite explicite), elle peut n'en contenir que certaines seulement (la requête est alors dite lacunaire) voire n'en contenir aucune (la requête est dite implicite). Une requête calculatoire implicite peut ne contenir que l'étiquette $k$ de la tâche calculatoire à exécuter. Dans tous les cas, le résultat du calcul étant représenté par un ensemble de données de sortie, noté $X_k^{out}$, renvoyé à l'UE sur la voie descendante.

Une idée à la base de la présente invention est de modéliser la distribution des données d'entrée $X_k^{in}$ des différentes tâches calculatoires à l'aide d'un modèle génératif, notamment à l'aide d'un modèle génératif profond (*deep generative model*) tel qu'un couple de réseaux antagonistes génératifs, encore dénommé GAN (*Generative Adversarial Network*), ou un auto-encodeur variationnel encore dénommé VAE (*Variational Auto-Encoder*). Ce modèle génératif permet de générer un vecteur de données de synthèse, $\tilde{X}_k^{in}$, lorsque le vecteur de données d'entrée est absent ou lacunaire. La modélisation peut être effectuée lors d'une phase d'apprentissage préalable et, le cas échéant, se poursuivre ensuite en ligne.

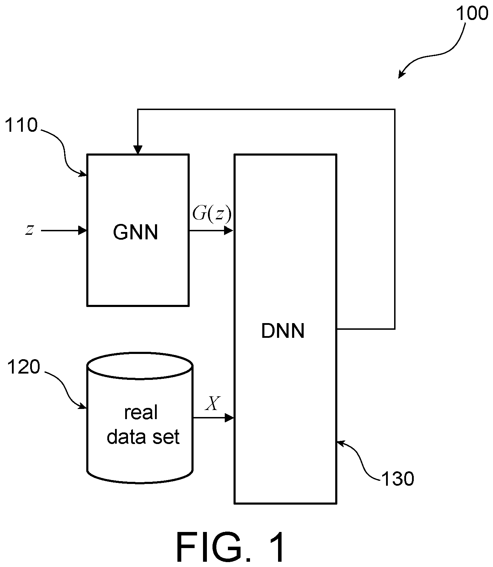

On a représenté en Fig. 1 un premier exemple de modèle génératif destiné à modéliser les données d'entrée de tâches calculatoires requises par des terminaux mobiles. Ce modèle génératif peut modéliser les données d'entrée relatives à un type donné de tâche calculatoire, $c_k$, où $k$ est l'étiquette de la tâche. Dans ce cas la modélisation des données d'entrée relatives à l'ensemble des tâches calculatoires du catalogue nécessite une pluralité $K$ de tels modèles génératifs. Alternativement, le modèle génératif pourra être conditionnel, auquel cas il se décomposera en une pluralité $K$ de sous-modèles génératifs chacun des sous-modèles pouvant être entraînés sur des données d'entrée relatives à un type de tâche donné.

Le modèle génératif 100 est ici un GAN, c'est-à-dire un couple de réseaux de neurones antagonistes. Il est comprend un premier réseau de neurones génératif ou GNN, 110, et un second réseau de neurones discriminant ou DNN, 130, dont la fonction est d'attribuer aux données d'entrée la probabilité qu'elles aient été générées de manière artificielle par le réseau GNN ou bien d'être réelles. Pour ce faire, le réseau discriminant accède à un ensemble d'apprentissage constitué de données réelles, 120.

Le principe d'un modèle génératif de type GAN est celui d'une amélioration itérative des réseaux GNN et DNN par apprentissage sur des données générées artificiellement G(z) et des données réelles $X$ : le réseau DNN améliore sa capacité de discrimination et le réseau améliore sa capacité à générer des données artificielles selon une distribution proche de celles des données réelles.

On pourra trouver une description détaillée des réseaux antagonistes génératifs dans l'article de Ian Goodfellow et al. intitulé « Generative adversarial networks » publié le 2014 sur la plateforme arXiv.

Dans le cadre de la présente invention, le réseau GNN du modèle génératif apprend à générer des vecteurs de données d'entrée $X_k^{in}$ pour un type particulier de tâche ou bien une pluralité $K$ de tâches. Dans ce second cas, les réseaux GNN et DNN sont conditionnels et reçoivent également en entrée l'étiquette $k$ de la tâche.

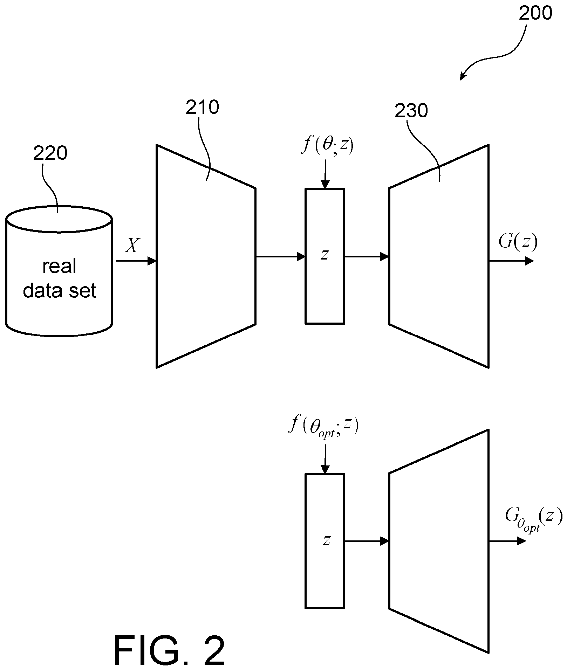

On a représenté en Fig. 2 un second exemple de modèle génératif destiné à modéliser les données d'entrée de tâches calculatoires requises par des terminaux mobiles

Le modèle génératif est basé ici sur un auto-encodeur variationnel, 200. Cet auto-encodeur comprend un premier réseau de neurones, dit encodeur, 210, transformant des vecteurs de données d'entrée en un code $z$, c'est-à-dire en un vecteur de variables latentes de dimension sensiblement inférieure à la dimension des vecteurs de données d'entrée. En d'autres termes, l'encodeur effectue une opération de compression dans un espace de faible dimension représentant sous forme condensée la distribution statistique des vecteurs de données d'entrée. L'auto-encodeur comprend en outre un décodeur, 230, adapté à générer des vecteurs de données de synthèse à partir du code $z$ . Le principe de l'auto-encodeur variationnel est de définir une famille de fonctions déterministes $f(\theta;z)$ pouvant représenter la distribution $P(X|z,\theta)$ paramétrées par $\theta$ et de rechercher la valeur optimale $\theta_{opt}$ maximisant la probabilité de chaque vecteur de données d'entrée dans l'ensemble d'apprentissage.

Le modèle génératif est représenté alors par le décodeur 230 de l'auto-encodeur correspondant à cette valeur optimale.

On pourra trouver une description détaillée des auto-encodeurs variationnels dans l'article de C. Doersch intitulé « Tutorial on variational encoders » publié le 3.1.2021 sur la plateforme arXiv.

Quel que soit l'exemple de réalisation du modèle génératif, celui-ci peut être utilisé pour générer des données d'entrée d'une tâche calculatoire.

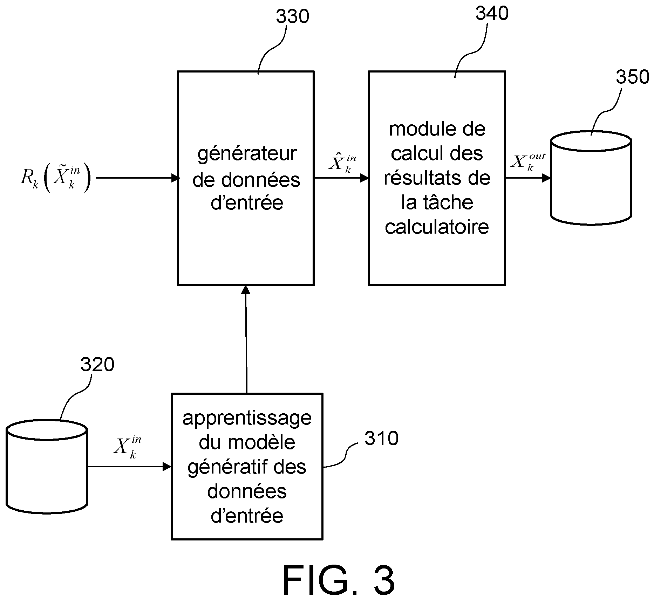

La Fig. 3 représente de manière schématique un système permettant de mettre en œuvre une méthode de calcul par mise en cache de résultats d'une tâche calculatoire, selon un mode de réalisation de l'invention.

Ce système est destiné à être hébergé dans un hôte en périphérie de réseau (MEH) ou peut être distribué sur une pluralité de tels hôtes, associés à des cellules SSC voisines. En particulier, si besoin, une requête d'exécution de tâche calculatoire reçue par un hôte MEH, pourra être transmis à un hôte de SSC voisine.

Il comprend un module d'apprentissage, 310, du modèle génératif. Le module d'apprentissage opère à partir de vecteurs de données d'entrée réelles, $X_k^{in}$ , de la tâche calculatoire, $c_k$ . Les données d'entrée réelles sont stockées par exemple dans la base de données 320. L'apprentissage peut encore se poursuivre ultérieurement en ligne à partir de requêtes explicites, au sens défini plus haut, de calcul de tâche calculatoire $c_k$.

Les paramètres du modèle génératif sont stockés dans une première mémoire, le cas échéant dans une mémoire cache (non représentée).

Lorsqu'un terminal transmet une requête d'exécution $R_k$ d'une tâche calculatoire $c_k$, sans fournir pour autant de données d'entrée ou bien en fournissant un vecteur de données d'entrée lacunaire, les paramètres du modèle génératif correspondant à cette tâche sont chargés dynamiquement dans le générateur de données d'entrée et celui-ci génère des données d'entrée de synthèse, $\hat{X}_k^{in}$ obéissant à la distribution statistique des données d'entrée réelles de la tâche en question. Le vecteur de données de synthèse est fourni à un module de calcul 340 qui calcule le résultat de la tâche calculatoire en question, noté $X_k^{out}$. Le résultat de calcul est avantageusement stocké dans une mémoire cache, 350. Cette mémoire cache peut être hébergée par l'hôte MEH ou bien être distribuée sur une pluralité de MEH appartenant à des cellules voisines. Par exemple, les hôtes MEH de différentes cellules voisines peuvent héberger des mémoires cache contenant des résultats de tâches calculatoires de types différents.

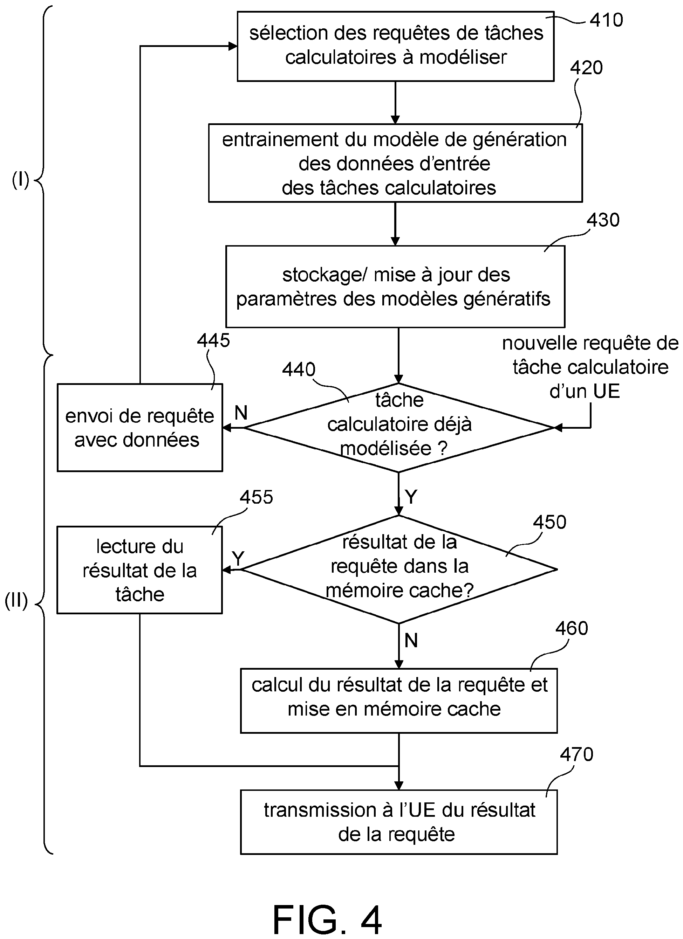

La Fig. 4 représente de manière schématique l'organigramme d'une méthode de calcul par mise en cache de résultats d'une tâche calculatoire en périphérie de réseau MEC, selon un mode de réalisation de l'invention.

La méthode de calcul comprend une phase d'apprentissage (I) suivie d'une phase opérationnelle (II).

Dans la phase d'apprentissage, les requêtes de calcul des différents terminaux mobiles sont explicites, autrement dit les données d'entrées des tâches calculatoires sont fournies avec la requête au MEH à l'étape 410.

Optionnellement, comme expliqué plus loin, un tri est effectué au niveau des requêtes de tâches calculatoires pour déterminer si les données d'entrées de ces dernières sont à modéliser ou non au moyen d'un modèle génératif.

Dans une seconde étape, 420, il est procédé à l'entrainement du modèle génératif des données d'entrées et ce pour chaque tâche calculatoire, après l'étape optionnelle de sélection des tâches calculatoires.

Les paramètres des modèles génératifs sont ensuite stockés dans une mémoire cache du MEH en 430. Le cas échéant, les MEHs de cellules voisines peuvent être groupés en clusters et les paramètres des modèles génératifs être stockés de manière centralisée dans une mémoire cache d'un MEH représentant du cluster.

Au terme de la phase d'apprentissage, les MEHs disposent donc de modèles génératifs permettant de générer des données d'entrée des tâches calculatoires dont ils peuvent être chargés par voie de requête.

Dans la phase opérationnelle, chaque terminal mobile peut transmettre une requête de tâche calculatoire au MEH de la cellule SSC dont il dépend. Le terminal mobile pourra préalablement déterminer pour chaque tâche calculatoire si celle-ci peut être déléguer au MEH. Ce choix peut être guidé par un certain nombre de critères, tels que la confidentialité des données, la comparaison entre le temps de calcul en local (nombre de cycles de CPU par exemple) avec le temps de latence correspondant au temps de transmission et de traitement distant de la requête augmenté du temps de transfert du résultat au terminal mobile, la consommation d'énergie du terminal mobile pour effectuer le calcul. D'autres critères pourront être pris en compte par l'homme du métier sans pour autant sortir du cadre de la présente invention.

La requête transmise par le terminal mobile est avantageusement transmise sous forme implicite ou lacunaire, autrement dit la requête ne comprend pas ou ne comprend qu'une partie (sous-échantillonnage ou masquage par exemple) des données d'entrée de la tâche calculatoire. Ainsi, le terminal mobile pourra ne pas transmettre des informations confidentielles ou bien réduire partiellement voire entièrement la quantité de données à transmettre sur la voie montante.

A l'étape 440, le MEH détermine si la tâche calculatoire requise a fait l'objet d'une modélisation de ses données d'entrée, autrement dit si un modèle génératif est associé à cette tâche.

Si ce n'est pas le cas, le terminal mobile pourra effectuer lui-même la tâche calculatoire ou bien renvoyer en 445 au MEH une requête explicite (avec les données d'entrée de la tâche calculatoire) afin que ces données puissent être modélisées en 410 par un modèle génératif associé à cette tâche. Cette requête pourra être soumise au processus de sélection décrit en relation avec l'étape 410.

En revanche, si un modèle génératif est associé à la tâche calculatoire, on recherche en 450 si un résultat de cette tâche est déjà disponible pour un vecteur de données d'entrée déjà synthétisé par le modèle génératif. Lorsque la requête est lacunaire, on choisit le résultat de la tâche obtenu à partir du vecteur synthétisé le plus proche du vecteur d'entrée lacunaire, au sens d'une métrique prédéterminée. Si un tel résultat est disponible, le MEH le lit dans la mémoire cache.

Lorsqu'aucun résultat n'est disponible pour cette tâche calculatoire ou bien encore, dans le cas d'une requête lacunaire, si ce résultat a été obtenu pour un vecteur synthétisé éloigné d'une valeur de seuil prédéterminée du vecteur d'entrée lacunaire, un vecteur d'entrée est synthétisé par le modèle génératif à partir d'un vecteur de bruit, par exemple un vecteur de bruit gaussien. La tâche calculatoire est alors effectuée en 460 par le module de calcul 340 sur la base du vecteur d'entrée de synthèse et le résultat du calcul est stocké dans la mémoire cache.

Dans tous les cas, le résultat lu de la mémoire cache en 455 ou calculé en 460 est transmis à l'UE en 470.

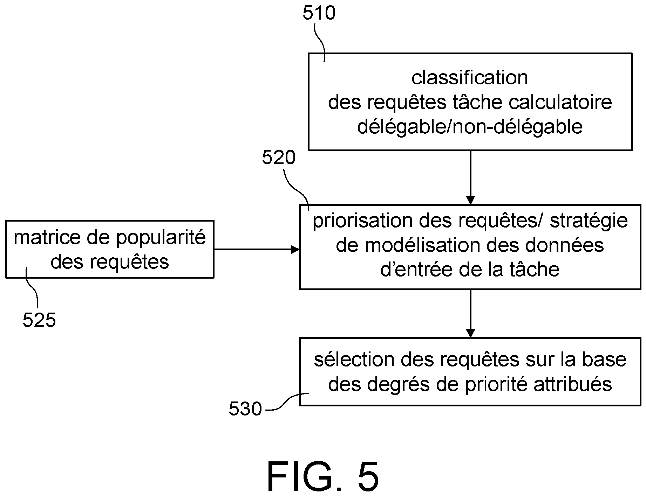

La Fig. 5 représente schématiquement un exemple de réalisation de la sélection des requêtes de tâches calculatoires dont les données d'entrée sont à modéliser, pouvant être effectuée à l'étape 410 de la Fig. 4.

On se place à nouveau dans le contexte de la phase d'apprentissage pendant laquelle les terminaux mobiles peuvent transmettre des requêtes explicites de tâches calculatoires et l'on considère le cas d'un terminal mobile devant exécuter une telle tâche.

Dans une première étape, 510, le terminal mobile détermine si la tâche calculatoire peut être déléguée au MEH. Cette délégation ne sera notamment pas possible si la requête en question porte sur des données possédant un caractère confidentiel. Si la tâche calculatoire ne peut être déléguée, celle-ci est effectuée par le terminal mobile lui-même.

Dans une seconde étape, 520, un niveau de priorité est attribué à la requête selon une stratégie de priorisation de modélisation des données d'entrée. Cette stratégie utilise avantageusement le degré de popularité de la requête de la tâche calculatoire au sein la cellule SSC. Le degré de popularité de la tâche en question peut être déduit de la matrice de popularité **P** des différentes tâches calculatoires comme indiqué en 525. Cette matrice de taille $N \times K$ est constitué d'éléments $p_{n,k}$ où est l'indice d'une cellule SSC et $k$ est l'indice de la tâche, l'élément $p_{n,k}$ donnant la probabilité que la tâche $k$ soit requise par un terminal se trouvant dans la cellule SSC $n$. Ainsi, la somme des éléments de chaque ligne est égale à 1.

Selon une première stratégie de priorisation de modélisation, chaque requête de tâche calculatoire est affectée d'un niveau de priorité, $\lambda$, proportionnel au degré de popularité $p$ de la tâche calculatoire ainsi qu'à la taille du vecteur de données d'entrée, soit $\lambda = p.W$.

Selon une deuxième stratégie de priorisation de modélisation, chaque requête de tâche calculatoire est affectée d'un niveau de priorité, $\lambda$, proportionnel au degré de popularité $p$ de la tâche calculatoire, à la taille du vecteur de données d'entrée, $W$, et inversement proportionnel à la taille du résultat du calcul, $W'$, soit $\lambda = p.W/W'$.

Selon une troisième stratégie de priorisation de modélisation, chaque requête de tâche calculatoire est affectée d'un niveau de priorité, $\lambda$, proportionnel au degré de popularité $p$ de la tâche calculatoire, à la taille du vecteur de données d'entrée, et inversement proportionnel à la taille du modèle génératif, soit $\lambda = p.W / M$. La taille $M$ du modèle génératif pourra être estimée comme le nombre de bits nécessaire pour décrire les paramètres du modèle en question.

Enfin, selon une quatrième stratégie de priorisation de modélisation, chaque requête de tâche calculatoire est affectée d'un niveau de priorité, $\lambda$, proportionnel au degré de popularité $p$ de la tâche calculatoire, à la taille du vecteur de données d'entrée, et inversement proportionnel à la taille du modèle génératif ainsi qu'à la taille du résultat du calcul, soit $\lambda = p.W / (M.W')$ en conservant les notations précédentes.

Alternativement encore, aucune priorisation de modélisation sera effectuée ou, de manière équivalente, un même degré de priorité sera attribué aux différentes requêtes de taches calculatoires. La stratégie de priorisation pourra être adaptée en fonction du trafic de requêtes sur la voie montante ou de taille de mémoire.

Une sélection des différentes requêtes de tâches calculatoires est ensuite effectuée à l'étape 530 sur la base des priorités attribuées à l'étape 520.

Par exemple, les paramètres d'un modèle génératif pourront être calculés/mis à jour et stockés en mémoire sur la base des requêtes dont le degré de priorité est supérieur à une valeur de seuil. Si la mémoire est saturée, les paramètres d'un modèle génératif pourront être calculés/mis à jour et stockés en mémoire sur la base des requêtes de tâches calculatoires dont le degré de priorité est supérieur à celui des requêtes ayant servi à l'élaboration des modèles génératifs dont les paramètres sont déjà stockés en mémoire.

Les paramètres des modèles génératifs peuvent être stockés dans une mémoire du MEH voire dans une mémoire partagée entre plusieurs MEHs d'un cluster.

## Revendications

1. Méthode de calcul en périphérie de réseau, le calcul en périphérie de réseau étant également appelé calcul MEC, de l'Anglais 'Mobile Edge Computing', la méthode comprenant une phase d'apprentissage (I) et une phase opérationnelle (II), dans laquelle, lors de la phase d'apprentissage :

    a) des requêtes de tâches calculatoires sont transmises par les terminaux mobiles à un hôte en périphérie de réseau, dit MEH ;
    b) des modèles génératifs de données d'entrée, aptes à générer des données d'entrée pour les taches calculatoires dont ils peuvent être chargés par voie de requête, sont entraînés sur la base de données d'entrée fournies par des requêtes sélectionnées (410, 420) parmi les requêtes de tâches calculatoires, lesdites données d'entrée étant des données réelles ; et les paramètres de ces modèles génératifs sont stockés en périphérie de réseau ; et lors de la phase opérationnelle :
    c) lorsqu'un terminal mobile transmet une requête de tâche calculatoire au dit MEH, ce dernier vérifie (440) si les données d'entrée de cette tâche calculatoire sont déjà modélisées par un modèle génératif et,
    d) dans l'affirmative, le MEH vérifie (450) si un résultat de la tâche calculatoire sur la base de données d'entrée synthétiques issues du modèle génératif identifié lors de la vérification réalisée à l'étape c) est déjà disponible dans une mémoire cache, ledit résultat étant alors lu dans cette mémoire par le MEH ;

e) dans la négative, le MEH génère des données d'entrée de synthèse à l'aide du modèle génératif associé à la tâche calculatoire et calcule (460) un résultat sur la base desdites données d'entrée de synthèse ;

f) dans les deux cas, le MEH transmet (470) ledit résultat au terminal mobile .

2. Méthode de calcul en périphérie de réseau selon la revendication 1, **caractérisée en ce qu'**à l'étape (a) le terminal mobile détermine si les requêtes de tâches calculatoires sont délégables ou non, seules les requête délégables étant transmises au MEH et les autres étant effectuées par le terminal mobile lui-même.

3. Méthode de calcul en périphérie de réseau selon la revendication 1 ou 2, **caractérisée en ce qu'**à l'étape (b), le MEH attribue aux requêtes de tâches calculatoires des degrés de priorité selon une stratégie de priorisation, les requêtes étant ensuite sélectionnées sur la base des degrés de priorité qui leur ont été respectivement attribués.

4. Méthode de calcul en périphérie de réseau selon la revendication 3, **caractérisée en ce qu'**un degré de priorité est attribué à une requête de tache calculatoire en fonction d'un degré de popularité de cette tâche dans une cellule où se trouve le terminal mobile ayant transmis la requête.

5. Méthode de calcul en périphérie de réseau selon la revendication 4, **caractérisée en ce que** le degré de popularité d'une requête de tâche calculatoire est obtenu à partir d'une matrice de popularité, ladite matrice de popularité étant constitué d'éléments, chaque élément étant relatif à une tâche calculatoire parmi une pluralité K de tâches et à une cellule parmi une pluralité N de cellules voisines.

6. Méthode de calcul en périphérie de réseau selon la revendication 4 ou 5, **caractérisée en ce que** le degré de priorité d'une requête de tâche calculatoire est choisi proportionnel au degré de popularité de cette tâche calculatoire ainsi qu'à la taille d'un vecteur représentant les données d'entrée de cette tâche.

7. Méthode de calcul en périphérie de réseau selon la revendication 4 ou 5, **caractérisée en ce que** le degré de priorité d'une requête de tâche calculatoire est choisi proportionnel au degré de popularité de cette tâche calculatoire, à la taille d'un vecteur représentant les données d'entrée de cette tâche et inversement proportionnel à la taille du résultat du calcul de cette tâche.

8. Méthode de calcul en périphérie de réseau selon la revendication 4 ou 5, **caractérisée en ce que** le degré de priorité d'une requête de tâche calculatoire est choisi proportionnel au degré de popularité de cette tâche calculatoire, à la taille d'un vecteur représentant les données d'entrée de cette tâche et inversement proportionnel à la taille du modèle génératif associé à cette tâche.

9. Méthode de calcul en périphérie de réseau selon la revendication 4 ou 5, **caractérisée en ce que** le degré de priorité d'une requête de tâche calculatoire est choisi proportionnel au degré de popularité de cette tâche calculatoire ainsi qu'à la taille d'un vecteur représentant les données d'entrée de cette tâche, et inversement proportionnel à la taille du modèle génératif ainsi qu'à la taille du résultat de calcul de cette tâche.

10. Méthode de calcul en périphérie de réseau selon l'une des revendications précédentes, caractérisée en que les MEHs d'une pluralité de cellules voisines partagent une mémoire dans laquelle sont stockés les paramètres des modèles génératifs et/ou les résultats des calculs de tâches calculatoires à partir des données de synthèse générées par les modèles génératifs.

11. Méthode de calcul en périphérie de réseau selon l'une des revendications précédentes **caractérisée en ce que** lesdits modèles génératifs sont des réseaux de neurones antagonistes ou des auto-encodeurs variationnels.

**Patentansprüche**

1. Berechnungsverfahren am Netzwerkrand, wobei das Rechnen am Netzwerkrand auch MEC, "Mobile Edge Computing" aus dem Englischen, genannt wird, wobei das Verfahren eine Lernphase (I) und eine Betriebsphase (II) umfasst, wobei während der Lernphase:

a) Rechenaufgabenanfragen von den mobilen Endgeräten an einen am Netzwerkrand befindlichen Host, den sogenannten MEH, übertragen werden;

b) generative Modelle von Eingabedaten, die dazu ausgelegt sind, Eingabedaten für die Rechenaufgaben zu genieren, mit denen sie durch Anfragen beauftragt werden können, auf der Grundlage von Eingabedaten trainiert werden, die von ausgewählten Anfragen (410, 420) der Rechenaufgabenanfragen geliefert werden, wobei die Eingabedaten reale Daten sind; und die Parameter der generativen Modelle am Netzwertrand gespeichert werden; und während der Betriebsphase:

c) wenn ein mobiles Endgerät eine Rechenaufgabeanfrage an den MEH überträgt, dieser prüft (440), ob die Eingabedaten dieser Rechenaufgabe bereits durch ein generatives Modell modelliert sind, und

d) wenn ja, der MEH prüft (450), ob ein Ergebnis der Rechenaufgabe auf der Grundlage von zusammenfassenden Eingabedaten aus dem generativen Modell, das bei der Prüfung in Schritt c) identifiziert wurde, bereits in einem Cache-Speicher verfügbar ist, wobei das Ergebnis dann vom MEH aus diesem Speicher ausgelesen wird;

e) wenn nicht, der MEH zusammenfassende Eingabedaten mit Hilfe des generativen Modells generiert, das der Rechenaufgabe zugewiesen ist, und ein Ergebnis auf der Grundlage der zusammenfassenden Eingabedaten berechnet (460);

f) in beiden Fällen der MEH (470) das Ergebnis an das mobile Endgerät überträgt.

2. Berechnungsverfahren am Netzwerkrand nach Anspruch 1, **dadurch gekennzeichnet, dass** das mobile Endgerät in Schritt (a) bestimmt, ob die Anfragen für Rechenaufgaben delegierbar sind oder nicht, wobei nur die delegierbaren Anfragen an den MEH übertragen werden und die anderen von dem mobilen Endgerät selbst ausgeführt werden.

3. Berechnungsverfahren am Netzwerkrand nach Anspruch 1 oder 2, **dadurch gekennzeichnet, dass** der MEH in Schritt (b) Anfragen von Rechenaufgaben Prioritätsgrade gemäß einer Priorisierungsstrategie zuordnet, wobei die Anfragen dann auf der Grundlage des Prioritätsgrads ausgewählt werden, die ihnen jeweils zugewiesen worden sind.

4. Berechnungsverfahren am Netzwerkrand nach Anspruch 3, **dadurch gekennzeichnet, dass** einer Rechenaufgabenanfrage ein Prioritätsgrad in Abhängigkeit von einem Beliebtheitsgrad dieser Aufgabe in einer Zelle zugewiesen wird, in der sich das mobile Endgerät befindet, das die Anfrage übertragen hat.

5. Berechnungsverfahren am Netzwerkrand nach Anspruch 4, **dadurch gekennzeichnet, dass** der Beliebtheitsgrad einer Rechenaufgabenanfrage aus einer Beliebtheitsmatrix ermittelt wird, wobei die Beliebtheitsmatrix aus Elementen besteht, wobei jedes Element auf eine Rechenaufgabe aus einer Vielzahl K von Aufgaben und eine Zelle aus einer Vielzahl N von benachbarten Zellen bezogen ist.

6. Berechnungsverfahren am Netzwerkrand nach Anspruch 4 oder 5, **dadurch gekennzeichnet, dass** der Prioritätsgrad einer Rechenaufgabenanfrage proportional zum Beliebtheitsgrad dieser Rechenaufgabe sowie zur Größe eines Vektors ausgewählt wird, der die Eingabedaten dieser Aufgabe darstellt.

7. Berechnungsverfahren am Netzwerkrand nach Anspruch 4 oder 5, **dadurch gekennzeichnet, dass** der Prioritätsgrad einer Rechenaufgabenanfrage proportional zum Beliebtheitsgrad dieser Rechenaufgabe, zur Größe eines Vektors, der die Eingabedaten dieser Aufgabe darstellt, und umgekehrt proportional zur Größe des Ergebnisses der Berechnung dieser Aufgabe ausgewählt wird.

8. Berechnungsverfahren am Netzwerkrand nach Anspruch 4 oder 5, **dadurch gekennzeichnet, dass** der Prioritätsgrad einer Rechenaufgabenanfrage proportional zum Beliebtheitsgrad dieser Rechenaufgabe, zur Größe eines Vektors, der die Eingabedaten dieser Aufgabe darstellt, und umgekehrt proportional zur Größe des dieser Aufgabe zugewiesenen generativen Modells ausgewählt wird.

9. Berechnungsverfahren am Netzwerkrand nach Anspruch 4 oder 5, **dadurch gekennzeichnet, dass** der Prioritätsgrad einer Rechenaufgabenanfrage proportional zum Beliebtheitsgrad dieser Rechenaufgabe sowie zur Größe eines Vektors, der die Eingabedaten dieser Aufgabe darstellt, und umgekehrt proportional zur Größe des generativen Modells sowie zur Größe des Berechnungsergebnisses dieser Aufgabe ausgewählt wird.

10. Berechnungsverfahren am Netzwerkrand nach einem der vorhergehenden Ansprüche, **dadurch gekennzeichnet, dass** die MEHs einer Vielzahl von benachbarten Zellen einen Speicher gemeinsam nutzen, in dem die Parameter der generativen Modelle und/oder die Ergebnisse der Berechnungen von Rechenaufgaben aus den von den generativen Modellen generierten zusammenfassenden Daten gespeichert werden.

11. Berechnungsverfahren am Netzwerkrand nach einem der vorhergehenden Ansprüche, **dadurch gekennzeichnet, dass** die generativen Modelle antagonistische neuronale Netzwerke oder variierende Auto-Encoder sind.

**Claims**

1. Method for network edge computing, network edge computing also being referred to as MEC, i.e. mobile edge computing, the method comprising a learning phase (I) and an operational phase (II), wherein in the learning phase:

> a) computational task requests are transmitted by the mobile terminals to a network edge host, referred to as MEH;
> b) generative models of input data, capable of generating input data for the computational tasks which they may be asked to perform by way of request, are trained on the basis of input data provided by selected requests (410, 420) from the computational task requests, said input data being real data; and the parameters of these generative models are stored at the network edge; and during the operational phase:
> c) when a mobile terminal transmits a computational task request to said MEH, the latter verifies (440) whether the input data of this computational task are already modelled by a generative model and,
> d) if yes, the MEH checks (450) whether a result of the computational task on the basis of synthetic input data issued by the generative model identified during the verification performed in step c) is already available in a cache memory, said result then being read from this memory by the MEH;
> e) if not, the MEH generates synthesis input data using the generative model associated with the computational task and calculates (460) a result on the basis of said synthesis input data;
> f) in both cases, the MEH transmits (470) said result to the mobile terminal.

2. Method for network edge computing according to claim 1, **characterised in that** in step (a) the mobile terminal determines whether the computational task requests are delegable or not, only the delegable requests being transmitted to the MEH and the others being carried out by the mobile terminal itself.

3. Method for network edge computing according to claim 1 or 2, **characterised in that** in step (b), the MEH assigns degrees of priority to the computational task requests according to a prioritisation strategy, the requests then being selected on the basis of degrees of priority which have been assigned to them respectively.

4. Method for network edge computing according to claim 3, **characterised in that** a degree of priority is assigned to a computational task request as a function of a degree of popularity of this task in a cell in which the mobile terminal that transmitted the request is located.

5. Method for network edge computing according to claim 4, **characterised in that** the degree of popularity of a computational task request is obtained from a popularity matrix, said popularity matrix being formed by elements, each element relating to one computational task of a plurality $K$ of tasks and to one cell of a plurality $N$ of neighbouring cells.

6. Method for network edge computing according to claim 4 or 5, **characterised in that** the degree of priority of a computational task request is selected to be proportional to the degree of popularity of this computational task and also to the size of a vector representing the input data of this task.

7. Method for network edge computing according to claim 4 or 5, **characterised in that** the degree of priority of a computational task request is selected to be proportional to the degree of popularity of this computational task, to the size of a vector representing the input data of this task and inversely proportional to the size of the computational result of this task.

8. Method for network edge computing according to claim 4 or 5, **characterised in that** the degree of priority of a computational task is selected to be proportional to the degree of popularity of this computational task, to the size of a vector representing the input data of this task and inversely proportional to the size of the generative model associated with this task.

9. Method for network edge computing according to claim 4 or 5, **characterised in that** the degree of priority of a computational task request is selected to be proportional to the degree of popularity of this computational task and to the size of a vector representing the input data of this task, and inversely proportional to the size of the generative model and to the size of the computational result of this task.

10. Method for network edge computing according to any one of the preceding claims, **characterised in that** the MEHs of a plurality of neighbouring cells share a memory in which the parameters of generative models are stored and/or the results of calculations of computational tasks on the basis of synthesis data generated by the generative models.

11. Method for network edge computing according to any one of the preceding claims, **characterised in that** said generative models are antagonistic neural networks or variational auto-encoders.

FIG. 1

**FIG. 2**

FIG. 3

```
                    ┌──────────────────────────────┐  410
                    │   sélection des requêtes de tâches │
                    │   calculatoires à modéliser        │
                    └──────────────────────────────┘
                                   │                        420
                                   ▼
                    ┌──────────────────────────────┐
                    │ entrainement du modèle de génération │
                    │     des données d'entrée             │
                    │     des tâches calculatoires         │
                    └──────────────────────────────┘
                                   │                        430
                                   ▼
                    ┌──────────────────────────────┐
                    │   stockage/ mise à jour des          │
                    │   paramètres des modèles génératifs  │
                    └──────────────────────────────┘
```

(I)

(II)

445

440 tâche calculatoire déjà modélisée ?

N

envoi de requête avec données

nouvelle requête de tâche calculatoire d'un UE

Y

455

lecture du résultat de la tâche

Y

450 résultat de la requête dans la mémoire cache?

N

460 calcul du résultat de la requête et mise en mémoire cache

470 transmission à l'UE du résultat de la requête

# FIG. 4

510

classification
des requêtes tâche calculatoire
délégable/non-délégable

520

matrice de popularité
des requêtes

priorisation des requêtes/ stratégie
de modélisation des données
d'entrée de la tâche

525

sélection des requêtes sur la base
des degrés de priorité attribués

530

# FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3045859 A

- FR 3045859 A1

**Littérature non-brevet citée dans la description**

- **GOODFELLOW et al.** *Generative adversarial networks*, 2014

- **C. DOERSCH**. *Tutorial on variational encoders*, 03 January 2021